# EUROPÄISCHE PATENTSCHRIFT

(11) **EP 4 264 089 B1**
(45) Veröffentlichungstag und Bekanntmachung des Hinweises auf die Patenterteilung: **19.06.2024**
(21) Anmeldenummer: 21839981.4
(22) Anmeldetag: 16.12.2021
(51) Int. Cl.: F16H 63/30, F16H 63/34, F16H 59/68

(54) **AKTUATOR UND VORRICHTUNG ZUM EINLEGEN EINER PARKSPERRE EINES KRAFTFAHRZEUGAUTOMATIKGETRIEBES MIT EINEM DERARTIGEN AKTUATOR SOWIE EIN DAMIT AUSGESTATTETES KRAFTFAHRZEUG**
ACTUATOR, AND DEVICE FOR ENGAGING A PARKING LOCK OF A MOTOR VEHICLE AUTOMATIC TRANSMISSION HAVING SUCH AN ACTUATOR, AND MOTOR VEHICLE EQUIPPED THEREWITH
ACTIONNEUR, ET DISPOSITIF DE MISE EN PRISE D'UN VERROU DE STATIONNEMENT D'UNE TRANSMISSION AUTOMATIQUE DE VÉHICULE AUTOMOBILE COMPORTANT LEDIT ACTIONNEUR, ET VÉHICULE AUTOMOBILE ÉQUIPÉ DE CELUI-CI

(30) Priorität: 21.12.2020 DE 102020134504
(43) Veröffentlichungstag der Anmeldung: 25.10.2023
(73) Patentinhaber: Küster Holding GmbH, 35630 Ehringshausen (DE)
(72) Erfinder: ROTH, Karsten, 35630 Ehringshausen (DE)
(74) Vertreter: Weckenbrock, Matthias
(86) Internationale Anmeldenummer: PCT/EP2021/086307
(87) Internationale Veröffentlichungsnummer: WO 2022/136130

(56) Entgegenhaltungen:
- WO-A1-2009/135503
- WO-A1-2017/182555
- DE-A1-102011 014 815
- DE-B4- 10 045 953

## Beschreibung

Die Erfindung betrifft einen Aktuator nach dem Oberbegriff des Patentanspruchs 1. Weiterhin betrifft die Erfindung eine Vorrichtung zum Aktivieren einer Parksperre eines Kraftfahrzeugautomatikgetriebes gemäß Patentanspruch 13 sowie ein damit ausgestattetes Kraftfahrzeug gemäß Anspruch 15.

Der Einsatz von automatischen Schaltbetätigungen beziehungsweise Shift-by-Wire-Systemen in Kraftfahrzeugen bietet gegenüber mechanisch gekoppelten Schaltbetätigungen einige Vorteile. So können beispielsweise die Schaltstufen des Getriebes flexibel und in Abhängigkeit des Fahrzeugzustandes per Software gewählt werden. Auch das Aktivieren der Parksperre durch Einlegen der P-Stufe erfolgt hierbei nicht mehr manuell durch den Fahrer, sondern wird durch die Steuerungssoftware, zum Beispiel beim Anhalten oder beim Verlassen des Fahrzeuges, automatisch sichergestellt. Da ein Einlegen der P-Stufe zum Aktivieren der Parksperre vor dem Verlassen des Kraftfahrzeuges aus Sicherheitsgründen zwingend erforderlich ist, verfügen derartige Systeme und Aktuatoren über Notfallmechanismen, die auch bei Störungen des Aktuators oder bei Spannungsausfall ein Einlegen der P-Stufe gewährleisten sollen. Diese Notfallmechanismen arbeiten typischerweise mit Energiespeichern, wie zum Beispiel mechanischen Federelementen, welche unabhängig vom Aktuator etwa das Einlegen einer mechanischen Notposition sicherstellen.

Ein Aktuator nach dem Oberbegriff des Patentanspruchs 1 ist aus der DE 10 2011 014 815 A1 bekannt. Darin wird ein Kraftfahrzeugparksperrenaktuator mit zumindest einer Spindel beschrieben, bei dem aus einer rotatorischen Bewegung eines Motors eine Längsbewegung zum automatischen Schalten einer Getriebestufe realisiert wird. Die Notfallfunktion zum Einlegen der Parksperre wird hierbei durch ein Federelement realisiert, welches durch das Betätigen der Nichtparkstellung des Aktuators vorgespannt und durch eine Verrastung mechanisch gehalten wird. Eine Schaltfunktion zum Auslösen des Notfallmechanismus zum Einlegen der P-Stufe soll durch eine vom Aktuator unabhängige Spannungsquelle erfolgen. Nachteilig bei diesem Aktuator ist allerdings, dass zum Auslösen des Notfallmechanismus eine unabhängige Spannungsquelle benötigt wird. Daher kann die P-Stufe nicht eingelegt werden, wenn die unabhängige Spannungsquelle ebenfalls nicht zur Verfügung steht, was insbesondere dann vorkommen kann, wenn der Akkumulator des Kraftfahrzeuges entladen ist und auch keine sonstige Spannungsquelle, wie beispielsweise ein ordnungsgemäß funktionierender Generator zur Verfügung steht.

Aus der DE 100 45 953 B4 ist eine Parksperrvorrichtung bekannt, die insbesondere für ein mit einem automatisiert steuerbaren Getriebe versehenes Kraftfahrzeug vorgesehen ist. Die Parksperrvorrichtung weist eine Betätigungsvorrichtung auf, die ein Betätigungselement zur Betätigung einer Parksperre, einen Federspeicher zur Aktivierung der Parksperre, einen steuerbaren Stellantrieb zur Deaktivierung der Parksperre und eine Sperrvorrichtung zur Arretierung der Parksperre im deaktivierten Zustand umfasst. Der Stellantrieb ist elektromechanisch wirksam ausgebildet und mit einem Hauptbetätigungshebel verbunden. Der Federspeicher, der Stellantrieb und die Sperrvorrichtung sind über den Hauptbetätigungshebel mit dem Betätigungselement in Verbindung bzw. in Wirkverbindung bringbar.

Aus der WO 2009/135503 A1 ist eine Vorrichtung zum Schalten eines Schaltgetriebes, umfassend eine Schaltgabel bekannt, die entlang einer Verstellachse V axial verschiebbar geführt ist, eine Kulissenscheibe, die um eine Drehachse D drehend antreibbar ist, sowie eine Führung, die an einer Stirnfläche der Kulissenscheibe um die Drehachse D angeordnet ist und zumindest über einen Teil ihrer Erstreckung einen veränderlichen Abstand zur Drehachse D aufweist, wobei die Schaltgabel einen Mitnehmer aufweist, der zum Verschieben der Schaltgabel mit der Führung in Eingriff ist.

Nachteilig bei bekannten Aktuatoren ist, dass deren Stellposition, insbesondere bei Stromausfall des Aktuators oder bei mechanischem Versagen der Ankopplung des Aktuators an die Stelleinrichtung, nicht zuverlässig bestimmt werden kann. Ferner entspricht die Motorbewegung bei einigen Aktuatoren nicht proportional dem Weg des Aktuator-Stellausgangs, so dass auch insoweit die Bewegung eines Übertragungselements, beispielsweise eines Betätigungszuges, nicht exakt festgestellt werden kann.

Aufgabe der Erfindung ist es daher, einen Aktuator nach dem Oberbegriff des Patentanspruchs 1 derart weiterzubilden, dass gewährleistet ist, dass in allen Situationen, insbesondere beim Ausfall der Spannungsversorgung oder bei mechanischen Problemen des Aktuators, die Stellposition des Aktuators zuverlässig erkannt wird. Ferner ist es Aufgabe der Erfindung, eine Vorrichtung zum Einlegen einer Parksperre eines Kraftfahrzeugautomatikgetriebes mit einem derartigen Aktuator sowie ein verbessertes Kraftfahrzeug zur Verfügung zu stellen.

Hinsichtlich des Aktuators wird diese Aufgabe gelöst durch einen Aktuator mit allen Merkmalen des Patentanspruchs 1. Bezüglich der Vorrichtung zum Einlegen einer Parksperre eines Kraftfahrzeugautomatikgetriebes wird die Aufgabe gelöst durch eine Vorrichtung mit allen Merkmalen des Patentanspruchs 13. Die Aufgabe wird ferner gelöst durch ein Kraftfahrzeug gemäß Anspruch 15. Vorteilhafte Ausgestaltungen der Erfindung finden sich in den Unteransprüchen.

Der erfindungsgemäße Aktuator weist dabei einen eine Antriebswelle antreibenden Antrieb und ein mit der Antriebswelle in Wirkverbindung stehendes erstes Betätigungselement zum Betätigen einer Schalteinrichtung, insbesondere eines Kraftfahrzeugs auf.

Darüber hinaus ist ein mittels der Antriebswelle antreibbares und drehbar gelagertes Drehelement vorgesehen, das eine erste Steuerkurve aufweist, welche mit dem ersten Betätigungselement zum Betätigen der Schalteinrichtung wirkverbunden ist.

Erfindungsgemäß ist die Stellposition des Aktuators mittels eines mit dem Drehelement wirkverbundenen Aufnahme- bzw. Halteelements für einen Positionsgeber induktiv bestimmbar.

Zum Verlassen der P-Stufe und Einlegen der unterschiedlichen Schaltstufen, beispielsweise R, N, D, ist das Drehelement mittels des Antriebes und der Antriebswelle so verdrehbar, dass die erste Steuerkurve das erste Betätigungselement auf Grund des Wirkkontaktes mit der ersten Steuerkurve bewegen kann. Eine den Aktuator und das Automatikgetriebe verbindende Schalteinrichtung, beispielsweise mit einem Schaltseilzug oder mit einer Schaltstange, ist dazu ausgebildet, die am Aktuator erzeugte Bewegung zu dem Automatikgetriebe weiterzuleiten, so dass die P-Stufe verlassen und unterschiedliche Schaltstufen, beispielsweise R, N, D eingestellt werden können.

Dazu kann die erste Steuerkurve verschiedene Steigungen für die Schaltbewegung bzw. zum Einlegen der Schaltstufen aufweisen. Die Steigung der Steuerkurve kann beispielsweise so ausgelegt sein, dass ausreichend Stellkraft zum Auslegen der Parksperre mittels des Aktuators oder einer Notverstelleinrichtung unter allen Bedingungen erzeugt werden kann. Die Stellkraft ist dabei im Wesentlichen die im Getriebe erforderliche Mindestverstellkraft zum Einlegen unterschiedlicher Schaltstufen.

Das induktive Messprinzip basiert darauf, dass ein veränderliches Magnetfeld einen Wirbelstrom in einem metallischen Material erzeugt.

In dem induktiven Messsystem erzeugt eine Spule, die Teil eines Schwingkreises ist, das Magnetfeld. Befindet sich ein elektrisch leitender Gegenstand innerhalb des Magnetfelds, werden in diesem gemäß dem Faraday'schen Induktionsgesetz Wirbelströme erzeugt. Diese bilden wiederum ein Magnetfeld aus, das dem ursprünglichen Feld entgegengerichtet ist und dadurch die Impedanz der Spule ändert. Diese Impedanz-Änderung kann im Schwingkreis mit hoher Empfindlichkeit detektiert werden und ergibt so ein Maß für die Position des Positionsgebers. Die Auswertung dieser Impedanz-Änderung und die Signalaufbereitung können in einem Controller umgesetzt werden. Diese Methode funktioniert mit allen elektrisch leitfähigen Messobjekten - sowohl aus ferromagnetischen als auch aus nicht-ferromagnetischen Metallen.

Das von der Spule erzeugte Magnetfeld kann in einer integrierten Schaltung, beispielsweise auf einer Leiterplatte vorgesehen sein.

Vorteilhafterweise wird aufgrund dieses induktiven Messverfahrens die Aktuatorposition zuverlässig erkannt. Zusätzliche Referenzfahrten des Aktuators, beispielsweise nach dem Einschalten des Systems, sind nicht notwendig. Besonders vorteilhaft ist dieses Messsystem bei Aktuatoren, bei denen die Motorbewegung nicht proportional dem Weg des Aktuator-Stellausgangs entspricht. Auch bei diesen Aktuatoren wird die Motorbewegung zuverlässig erfasst. Aufgrund der Erfindung ist eine hohe Messgenauigkeit möglich. Ferner ist das induktive Messsystem leicht zu montieren und unempfindlich gegen mechanische Toleranzen. Auch sind die induktiven Messsysteme in einem hohen Maß unempfindlich gegenüber Temperaturschwankungen.

Auch im Falle eines Systemausfalls des Aktuators werden sogenannte "nicht-sicher"-Zustände, also Zustände, in denen die zuverlässige Funktion des Aktuators nicht gewährleistet ist, exakt bestimmt.

Vorteilhafterweise sind keine zusätzlichen Drehzahlsensoren am Antrieb oder am Drehelement notwendig, insbesondere sind auch kein Magnetrad, Magnete oder Hallsensoren zur Positionsbestimmung nötig. Denn durch den Positionsgeber wird die durch die erste Steuerkurve vorgegebene Stellposition des Aktuators zuverlässig überwacht.

Für den Fall, dass die mechanische Ankopplung an das als Steuerscheibe wirkende Drehelement defekt ist und im Falle einer Bewegung der Aktuatorabgang in ggf. "nicht-sicher"-Bereiche gelangt, detektiert die induktive Sensorik diesen Bereich und es kann ein optisches oder akustisches Warn- oder Alarmsignal ausgeben werden.

Gemäß einer ersten vorteilhaften Ausgestaltung der Erfindung weist das Aufnahme- bzw. Halteelements ein zweites Betätigungselement zum An- beziehungsweise Eingriff in eine am Drehelement vorgesehene zweite Steuerkurve auf. Denn aufgrund der zweiten Steuerkurve, welche den Positionsgeber kontrolliert bzw. ansteuert wird die durch die erste Steuerkurve vorgegebene Stellposition des Aktuators zuverlässig überwacht. Auf diese Weise ist eine mechanische Ankopplung des Positionsgebers an das Drehelement umgesetzt, so dass die Stellposition des Aktuators aufgrund der durch die induktive Messung indirekt bestimmten Winkelposition des Drehelements exakt bestimmbar ist. Die Winkelposition des Drehelements wird in eine Linearposition des Positionsgebers gegenüber dem Magnetfeld umgesetzt. Aufgrund dieser Messung kann die Stellposition des Aktuators auch bei Ausfall oder Störung der mechanischen Anbindung dennoch zuverlässig bestimmt werden. Auch ist es möglich, sogenannte "sichere Bereiche" oder "nicht sichere Bereiche" zu definieren. Mit anderen Worten kann dann, wenn sich der Positionsgeber in einem "nicht sicheren Bereich" befindet, beispielsweise ein optisches oder akustisches Alarmsignal ausgegeben werden.

Erfindungsgemäß ist vorgesehen, dass der Positionsgeber zur induktiven Bestimmung der Stellposition des Aktuators an dem dem Drehelement abgewandten Ende des Aufnahme- bzw. Halteelements angeordnet ist. Auf diese Weise findet die Messung der Stellposition des Aktuators beabstandet von dem Drehelement statt, so dass der Aufbau insgesamt kompakter wird. Auch sind bei dieser Messmethode weitere Sensoren, wie Hallsensoren, zur Bestimmung der Winkelstellung des Drehelements nicht nötig.

Gemäß einer weiteren vorteilhaften Ausgestaltung der Erfindung ist der Positionsgeber ein, vorzugsweise in einem Rahmen aufgenommenes, Metallplättchen, welches zur induktiven Bestimmung der Stellposition des Aktuators mit einem magnetischen Feld wechselwirkt, welches vorzugsweise durch an oder auf einer Leiterplatte angeordnete Leiterschleifen gebildet ist. Durch diese berührungslose Positionsmessung aufgrund der elektromagnetischen Wechselfelder wird eine redundante Messung der Stellposition des Aktuators durchgeführt. Insbesondere kann diese lineare induktive Positionsmessung ein Sende- und Empfangsspulensystem aufweisen, die auf einer gemeinsamen Leiterplatte aufgebracht sind. Der gegenüber diesem Spulensystem "schwebende" Positionsgeber wird durch ein (hochfrequentes) magnetisches Wechselfeld gespeist, das von der Sendespule erzeugt wird. Entsprechend der Position wird vom Positionsgeber Spannung in das Empfangsspulensystem induziert. Dieses induktive Messprinzip ist besonders vorteilhaft, da es magnetfeldunempfindlich ist sowie berührungslos, verschleißfrei und hochdynamisch arbeitet. Die Phasenbeziehung der Messsignale ist das Maß für die aktuelle Position des Positionsgebers und wird von der Elektronik in ein lineares Positionssignal umgerechnet. Auf diese Weise kann die Position des Positionsgebers und somit des Drehelements bzw. die Stellposition des Aktuators hochpräzise bestimmt werden.

In einer weiteren vorteilhaften Variante der Erfindung ist der im Rahmen angeordnete Positionsgeber gegenüber dem Betätigungselement abgekröpft, so dass der zur Verfügung stehende Bauraum im Aktuator trotz eingeschränkter Platzverhältnisse optimal ausgenutzt wird.

Gemäß einer vorteilhaften Weiterbildung der Erfindung ist ein Sicherheitspin mit dem ersten Betätigungselement der ersten Steuerkurve wirkverbunden. Ferner ist am Aufnahme- bzw. Halteelement ein Anschlag für den Sicherheitspin vorgesehen, wobei der Positionsgeber mittels des Sicherheitspin verschiebbar ist. Dieser Sicherheitspin bewegt sich je nach Stellung des Aktuators, d.h. des Drehelements mit der Steuerkurve mit. Für den Fall, dass es bei der Ankopplung des Aufnahme- bzw. Halteelements zum Drehelement zu einem Defekt kommt, beispielsweise dass diese Ankopplung reißt, würde sich dann der Positionsgeber bei Bewegung des Drehelements folglich nicht mehr mitbewegen. Die Stellposition des Aktuators wäre dann nicht mehr induktiv ermittelbar. Aus diesem Grund ist der Anschlag am abgekröpften Bereich des Aufnahme- bzw. Halteelements vorgesehen. Gegen diesen Anschlag kann der mit dem ersten Betätigungselement der ersten Steuerkurve wirkverbundene Sicherheitspin gelangen, wenn die Ankopplung vom Aufnahme- bzw. Halteelement zum Drehelement defekt ist und sich der Positionsgeber bei Bewegung des Drehelements nicht mehr mitbewegt. Über diesen Anschlag verschiebt der Sicherheitspin dann den Positionsgeber.

Um eine besonders einfache konstruktive Ausgestaltung des Drehelementes zur Verfügung zu stellen, hat es sich bewährt, dass das Drehelement als Kreisscheibe ausgebildet ist, an welcher die beiden Steuerkurven auf jeweils einer der gegenüberliegenden Flächen der Kreisscheibe angeordnet sind. Insofern können die Steuerkurven mittels der entsprechenden Eingriffselemente problemlos angeordnet werden, ohne dass störende Einflüsse der jeweils anderen Steuerkurve beziehungsweise des dazu korrespondierenden Eingriffselementes berücksichtigt werden müssen.

Gemäß einer vorteilhaften Weiterbildung der Erfindung ist das Aufnahme- bzw. Halteelement innerhalb des Gehäuses des Aktuators angeordnet, um Bauraum zu sparen und die Kompaktheit des Aktuators weiter zu erhöhen.

Dabei ist zum An- beziehungsweise Eingriff in die erste Steuerkurve ein erstes Eingriffselement des Betätigungselementes zum Betätigen einer Schalteinrichtung und zum An- beziehungsweise Eingriff in die zweite Steuerkurve ein zweites Eingriffselement des zweiten Betätigungselementes vorgesehen. Auf diese Weise wir die Genauigkeit und Zuverlässigkeit der Steuerung und Messung weiter verbessert.

Das Drehelement kann in der Reichweite seiner Drehbewegung zwischen einer maximalen negative und einer maximalen positiven Drehposition aufgrund der Ausgestaltung der ersten und/oder der zweiten Steuerkurve beschränkt sein, so dass beispielsweise eine halbe Drehung in jeweils eine Drehrichtung, also etwa +180° oder - 180° möglich sind. In einer besonders vorteilhaften Ausgestaltung der Erfindung wird dies dadurch erreicht, dass das Drehelement mit den beiden Steuerkurven derart ausgebildet ist, dass es durch die Antriebswelle beziehungsweise den Antrieb zwischen einer maximalen negativen Winkelposition bei bis zu -180° und einer maximalen positiven Winkelposition bei bis zu +180° verdrehbar ist.

Es kann vorteilhafterweise vorgesehen sein, dass erste Steuerkurve derart ausgebildet ist, dass bei einer Drehung des Drehelementes aus seiner neutralen Drehposition von 0° in Richtung seiner maximalen negativen Drehposition bei bis zu -180°die Position das Betätigungselementes zum Betätigen einer Schalteinrichtung unverändert bleibt.

Nach einer weiteren vorteilhaften Ausgestaltung der Erfindung ist vorgesehen, dass bei einer Drehung des Drehelementes von 0° in Richtung der maximalen positiven Winkelposition, bspw. bis zu 180°, mittels der ersten Steuerkurve und des ersten Eingriffselementes des ersten Betätigungselementes unterschiedliche Schaltstufen einer solchen Schalteinrichtung einstellbar sind.

Dabei hat es sich weiterhin als vorteilhaft erwiesen, dass auf der Antriebswelle eine Schnecke angeordnet ist, durch welche eine Zahnradanordnung antreibbar ist, die wiederum das Drehelement antreibt. Dabei kann das Drehelement selbst Teil dieser Zahnradanordnung sein, wobei es auch möglich ist, dass die Zahnradanordnung auch aus nur einem Zahnrad besteht.

Alternativ ist es natürlich auch denkbar, dass die Zahnradanordnung aus mehreren Zahnrädern besteht, die miteinander in Wirkverbindung stehen, wobei dann ein Zahnrad als Kreisscheibe ausgebildet ist, welche die entsprechenden Steuerkurven auf ihren gegenüberliegenden Flächen aufweist.

Selbständig geschützt sein soll auch eine Vorrichtung zum Einlegen einer Parksperre eines Kraftfahrzeugautomatikgetriebes mit einem zuvor beschriebenen Aktuators.

Zudem soll selbstständig auch ein Kraftfahrzeug mittels einer solchen Vorrichtung geschützt sein, wobei das Kraftfahrzeug ein Automatikgetriebe und eine vorstehend beschriebene Vorrichtung zum Einlegen einer Parksperre des Automatikgetriebes aufweist.

Nach einem vorteilhaften Gedanken der Erfindung weist eine derartige Vorrichtung bzw. ein Kraftfahrzeug mit einer solchen Vorrichtung eine mechanische, elektromechanische, elektrische, elektronische, hydraulische oder pneumatische Notverstelleinrichtung auf, mit welcher das Betätigungselement zum Betätigen einer Schalteinrichtung verfahrbar ist, wenn der Antrieb nicht antreibbar ist.

Die Notverstelleinrichtung kann aus einem Stift bestehen, an welchem ein Zahnrad angeordnet ist, welches über eine Öffnung mit einem Werkzeug, insbesondere einem Imbusschlüssel, gedreht werden kann. Das Zahnrad kann dabei entgegen einer Rückstellkraft einer Feder federkraftbeaufschlagbar sein, sodass das Zahnrad mit einem Keilzahnrad einer Abtriebswelle des Antriebs in Wirkverbindung bringbar ist. Mittels dieser Notverstelleinrichtung ist es möglich, das Drehelement mithilfe eines Werkzeuges, insbesondere eines Imbusschlüssels, über die direkt mit der Antriebswelle des Antriebs verbundene Abtriebswelle zu betätigen, sodass das erste Betätigungselement betätigt werden kann.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, der durch die Merkmale der nachfolgenden Ansprüche definiert wird.

Es zeigen:
- Figur 1:: ein Ausführungsbeispiel eines erfindungsgemäßen Aktuators in einer perspektivischen Ansicht von der Seite,
- Figur 2:: ein Ausführungsbeispiel des erfindungsgemäßen Aktuators gemäß Figur 1 in einer perspektivischen Draufsicht,
- Figur 3:: den Aktuator gemäß Figur 1 in einer Draufsicht von oben,
- Figur 4:: eine Detailansicht des Aktuators gemäß Figur 1 in einer perspektivischen Draufsicht von oben,
- Figur 5:: den Aktuator gemäß Figur 1 in einer Darstellung von unten und
- Figur 6:: eine Detailansicht des Aktuators gemäß Figur 1 mit einer Sicherheitseinrichtung in einer perspektivischen Draufsicht von oben.

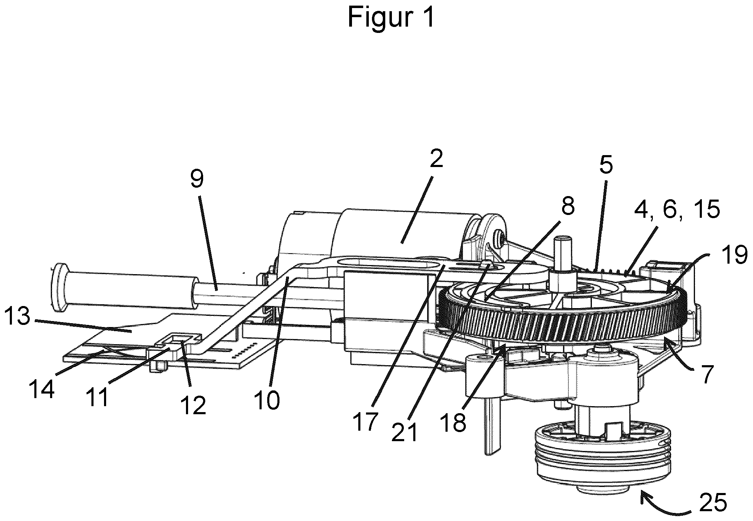

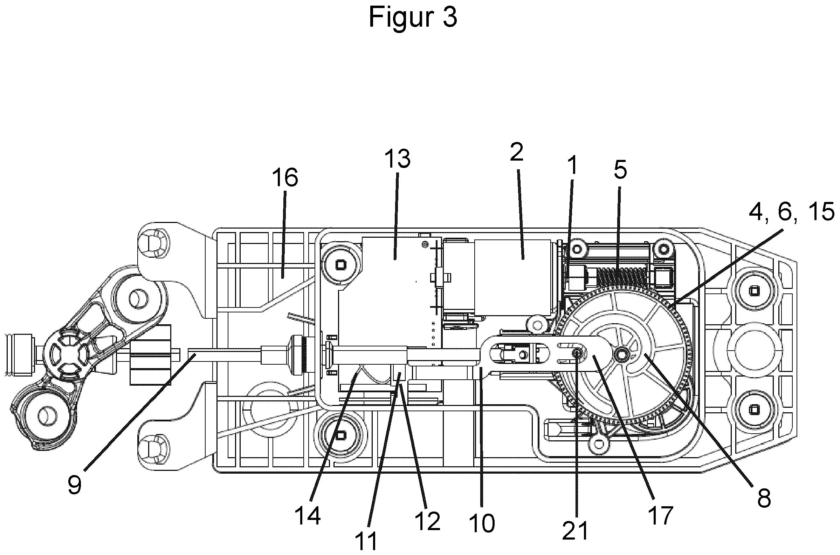

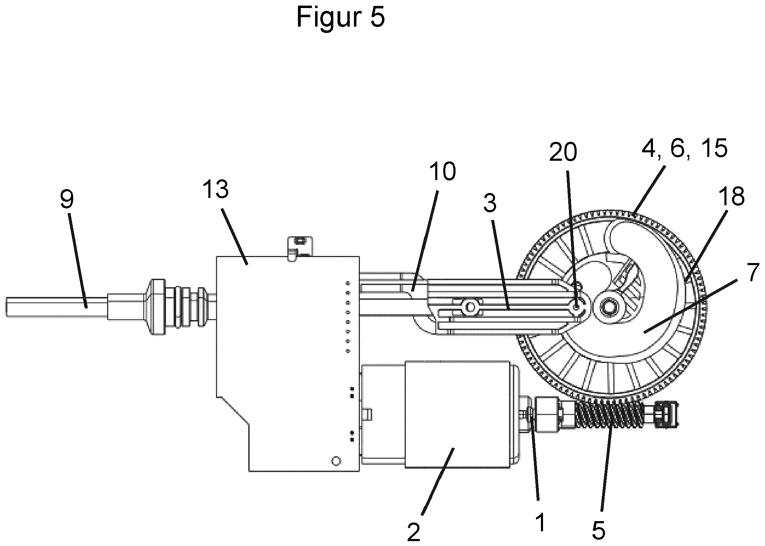

Figur 1 zeigt ein Ausführungsbeispiel eines erfindungsgemäßen Aktuators. Der Aktuator ist dabei gemäß Figur 3 auf einem Gehäusebauteil 16 angeordnet und kann mit einem nicht gezeigten Gehäusedeckel abgedeckt werden. Sichtbar ist in dieser Darstellung noch ein Seilzug 9, mittels dem verschiedene Schaltstufen eines Automatikgetriebes eines Kraftfahrzeuges einstellbar sind. Der Seilzug 9 ist dabei in Wirkverbindung mit einem ersten Betätigungselement 3 zum Betätigen der Schalteinrichtung des Kraftfahrzeugautomatikgetriebes des Kraftfahrzeuges. Dies geht auch aus Figur 5 hervor, welchen den Aktuator in einer Darstellung von unten zeigt.

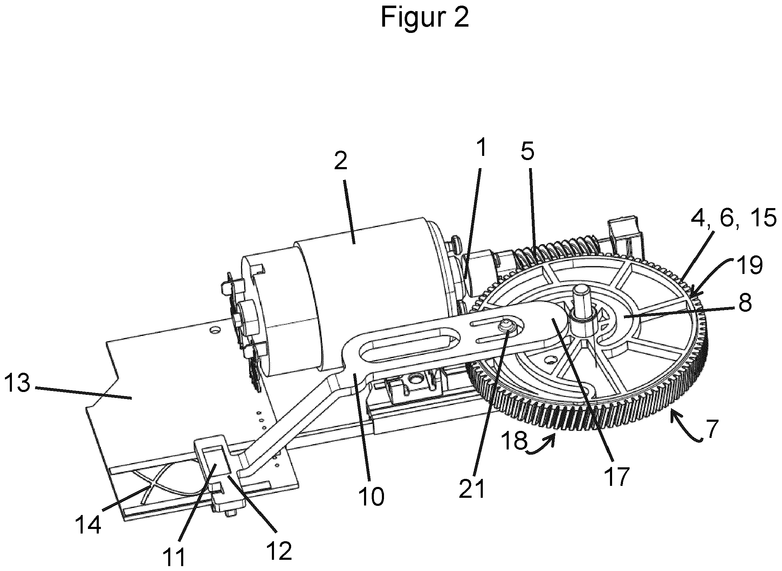

In Figur 2 ist nunmehr das Ausführungsbeispiel des erfindungsgemäßen Aktuators in einer perspektivischen Darstellung von oben gezeigt. Deutlich zu erkennen ist hierbei das als Zahnrad 15 ausgebildete Drehelement 4, welches zudem als Kreisscheibe 6 ausgebildet ist. Das Drehelement 4 ist dabei in seinem Mittelpunkt drehbar gelagert und weist auf seinen gegenüberliegenden Flächen 18 und 19 zwei unterschiedliche Steuerkurven 7 und 8 auf. Das Zahnrad 15, welches auch Teil einer Zahnradanordnung sein kann, kämmt im vorliegenden Fall mit einer in den Figuren 1 und 2 gezeigten Schnecke 5 einer Antriebswelle 1 eines Antriebes 2.

In der Figur 5 ist das erste Betätigungselement 3 erkennbar, welches einerseits mit einem ersten Eingriffselement 20 versehen ist, welches zum Eingriff in die erste Steuerkurve 7 eingreift und anderseits mit dem Seilzug 9 einer Schalteinrichtung des Automatikgetriebes des Kraftfahrzeuges verbunden ist.

In Figur 2 ist der Aktuator nunmehr in einer perspektivischen Ansicht von oben und in Figur 3 in Draufsicht von oben dargestellt. Besonders gut zu erkennen ist hierbei das als Kreisscheibe 6 und Zahnrad 15 ausgebildete Drehelement 4, welches drehbar gelagert ist. In dieser Darstellung ist nun auch der Antrieb 2 mit seiner Antriebswelle 1 zu erkennen, wobei auf der Antriebswelle 1 die Schnecke 5 angeordnet ist, die mit dem Zahnrad 15 kämmt.

Wie aus den Figuren 1 bis 6 hervorgeht, ist die Stellposition des Aktuators mittels eines mit dem Drehelement 4 wirkverbundenen Aufnahme- bzw. Halteelements 10 für einen Positionsgeber 11 induktiv bestimmbar.

In dem induktiven Messsystem erzeugt eine Spule, die Teil eines Schwingkreises ist, das Magnetfeld. Befindet sich ein elektrisch leitender Gegenstand innerhalb des Magnetfelds, werden in diesem gemäß dem Faraday'schen Induktionsgesetz Wirbelströme erzeugt. Diese bilden wiederum ein Magnetfeld aus, das dem ursprünglichen Feld entgegengerichtet ist und dadurch die Impedanz der Spule ändert. Diese Impedanz-Änderung kann im Schwingkreis mit hoher Empfindlichkeit detektiert werden und ergibt so ein Maß für die Position des Positionsgebers 9. Die Auswertung dieser Impedanz-Änderung und die Signalaufbereitung können in einem Controller umgesetzt werden. Diese Methode funktioniert mit allen elektrisch leitfähigen Messobjekten - sowohl aus ferromagnetischen als auch aus nicht-ferromagnetischen Metallen.

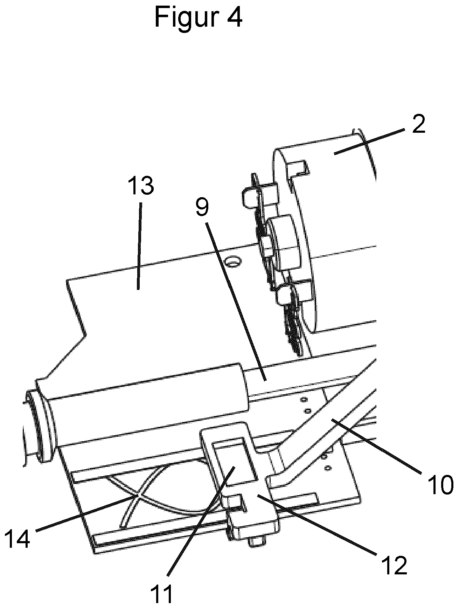

Im vorliegenden Ausführungsbeispiel wird ist die Spule durch auf einer Leiterplatte 13 angeordnete Leiterschleifen 14 gebildet, wie aus den Figuren 1 bis 3 und insbesondere aus der Detailansicht gemäß Figur 4 hervorgeht. Das durch diese Leiterschleifen 14 erzeugte Magnetfeld kann in einer integrierten Schaltung, beispielsweise auf der Leiterplatte 13 vorgesehen sein.

Auf diese Weise wird die Aktuatorposition zuverlässig erkannt. Im Falle eines Systemausfalls des Aktuators werden sogenannte "nicht-sicher"-Zustände, also Zustände, in denen die zuverlässige Funktion des Aktuators nicht gewährleistet ist, exakt bestimmt. Denn durch den Positionsgeber 11 wird die durch die erste Steuerkurve 7 vorgegebene Stellposition des Aktuators zuverlässig überwacht und ausgegeben.

Für den Fall, dass die mechanische Ankopplung an das als Steuerscheibe wirkende Drehelement defekt ist und im Falle einer Bewegung der Aktuatorabgang in ggf. "nicht-sicher"-Bereiche gelangt, detektiert die induktive Sensorik diesen Bereich und es kann ein optisches oder akustisches Alarmsignal ausgeben werden. Dies kann ggfs. mittels Auswertung anderer Sensoren im Fahrzeug, wie bspw. zur Erfassung der Raddrehzahl oder Sensoren am Getriebe, erfolgen.

Wie den Figuren 1 bis 6 zu entnehmen ist, weist das Aufnahme- bzw. Halteelements 10 ein zweites Betätigungselement 17 zum An- beziehungsweise Eingriff in eine am Drehelement 4 vorgesehene zweite Steuerkurve 8 auf. Denn aufgrund der zweiten Steuerkurve 8, welche den Positionsgeber 11 kontrolliert bzw. ansteuert wird die durch die erste Steuerkurve 7 vorgegebene Stellposition des Aktuators zuverlässig überwacht.

Auf diese Weise ist eine mechanische Ankopplung des Positionsgebers 11 an das Drehelement 4 umgesetzt, so dass die Stellposition des Aktuators aufgrund der durch die induktive Messung indirekt bestimmten Winkelposition des Drehelements 4 exakt bestimmbar ist. Die Winkelposition des Drehelements 4 wird also in eine Linearposition des Positionsgebers 11 gegenüber dem Magnetfeld umgesetzt.

Aufgrund dieser Messung kann die Stellposition des Aktuators auch bei Ausfall oder Störung der mechanischen Anbindung dennoch zuverlässig bestimmt werden. Auch ist es möglich, sogenannte "sichere Bereiche" oder "nicht sichere Bereiche" zu definieren. Mit anderen Worten kann dann, wenn sich der Positionsgeber in einem "nicht sicheren Bereich" befindet, beispielsweise ein optisches oder akustisches Alarmsignal ausgegeben werden.

Wie aus den Figuren 1 bis 6 weiter hervorgeht, ist der Positionsgeber 11 zur induktiven Bestimmung der Stellposition des Aktuators an dem dem Drehelement 4 abgewandten Ende des Aufnahme- bzw. Halteelements 10 angeordnet. Der Positionsgeber 11 ist vorliegend ein in einem Rahmen 12 aufgenommenes Metallplättchen, welches zur induktiven Bestimmung der Stellposition des Aktuators mit dem durch die Leiterschleifen 14 auf der Leiterplatte 13 gebildeten, magnetischen Feld wechselwirkt. Durch diese berührungslose Positionsmessung aufgrund der elektromagnetischen Wechselfelder wird eine redundante Messung der Stellposition des Aktuators durchgeführt.

Die Leiterschleifen 14 können als Sende- und Empfangsspulensystem ausgebildet sein, die gemeinsam auf der Leiterplatte 13 aufgebracht sind. Der gegenüber diesem Spulensystem "schwebende" Positionsgeber 11 wird durch das magnetische Wechselfeld gespeist, das von der Sendespule erzeugt wird. Entsprechend der Position des Positionsgebers 11 wird vom Positionsgeber 11 Spannung in das Empfangsspulensystem induziert. Die Phasenbeziehung der Messsignale ist das Maß für die aktuelle Position des Positionsgebers 11 und wird von der Elektronik in ein lineares Positionssignal umgerechnet. Auf diese Weise kann die Position des Positionsgebers 11 und somit des Drehelements 4 bzw. die Stellposition des Aktuators hochpräzise bestimmt werden.

Vorliegend ist entsprechend der Figuren 1 bis 4 und Figur 6 der im Rahmen 12 angeordnete Positionsgeber 11 gegenüber dem zweiten Betätigungselement 17 abgekröpft, d.h. er befindet sich im abgekröpften Bereich 24 des Aufnahme- bzw. Halteelements 10.

Die beiden Steuerkurven 7, 8 sind vorliegend auf jeweils einer der gegenüberliegenden Flächen 18, 19 der Kreisscheibe 6 angeordnet.

Das Aufnahme- bzw. Halteelement 10 ist innerhalb eines nicht dargestellten Gehäuses des Aktuators angeordnet, um Bauraum zu sparen und die Kompaktheit des Aktuators weiter zu erhöhen.

Wie insbesondere aus Figuren 1 und 2 hervorgeht, sind zum An- beziehungsweise Eingriff in die erste Steuerkurve 7 ein erstes Eingriffselement 20 des ersten Betätigungselementes 3 zum Betätigen einer Schalteinrichtung und zum Anbeziehungsweise Eingriff in die zweite Steuerkurve 8 ein zweites Eingriffselement 21 des zweiten Betätigungselementes 17 vorgesehen. Auf diese Weise wir die Genauigkeit und Zuverlässigkeit der Steuerung und Messung weiter verbessert.

Die Funktionsweise des erfindungsgemäßen Aktuators lässt sich insbesondere aus den Figuren 2 und 3 entnehmen. Danach befindet sich das Eingriffselement 20 des ersten Betätigungselementes 3 wirkverbunden in Eingriff mit der ersten Steuerkurve 7, die auf der Fläche 18 des Drehelementes 4 angeordnet ist. Wird nun mittels des Antriebes 2, der Antriebswelle 1 und der Schnecke 5 das als Zahnrad 15 ausgebildete Drehelement 4 verdreht, so wird das Betätigungselement 3 aufgrund des Eingriffs des Eingriffselementes 20 in die Steuerkurve 7 derart bewegt, dass sich mittels der von dem Seilzug 9 betätigten und hier nicht näher dargestellten Schalteinrichtung des Automatikgetriebes dieses aus einer Schaltstufe, beispielsweise der P-Stufe, herausbewegt wird und unterschiedliche Schaltstufen, beispielsweise R, N, D, einstellbar sind. Das Drehelement 4 ist dabei in seiner Drehbewegung aufgrund der Steuerkurve 7 beschränkt, sodass eine Drehung um in etwa +180° bis - 180° oder einen anderen Wert möglich ist.

Während der Drehung des Drehelementes 4 wird dabei auch das zweite Eingriffselement 21 des zweiten Betätigungselements 17 in der zweiten Steuerkurve 8 verlagert. Denn, wie erwähnt, sind die beiden Steuerkurven 7, 8 auf gegenüberliegenden Flächen 18, 19 des Drehelements 4 angeordnet, so dass sich bei Drehung des Drehelements 4 folglich beide Steuerkurven 7, 8 entsprechend mitdrehen.

Aufgrund der Verlagerung des an dem Aufnahme- bzw. Halteelement 10 angeordneten zweiten Betätigungselement 17 mit zweitem Eingriffselement 21 wird das im Rahmen 12 aufgenommene Metallplättchen, d.h. der Positionsgeber 11, in Relation zu dem von der Leiterschleife 14 erzeugten Magnetfeld linear verschoben. Die Positionen des Positionsgebers 11 lassen sich somit induktiv und berührungslos genau bestimmen.

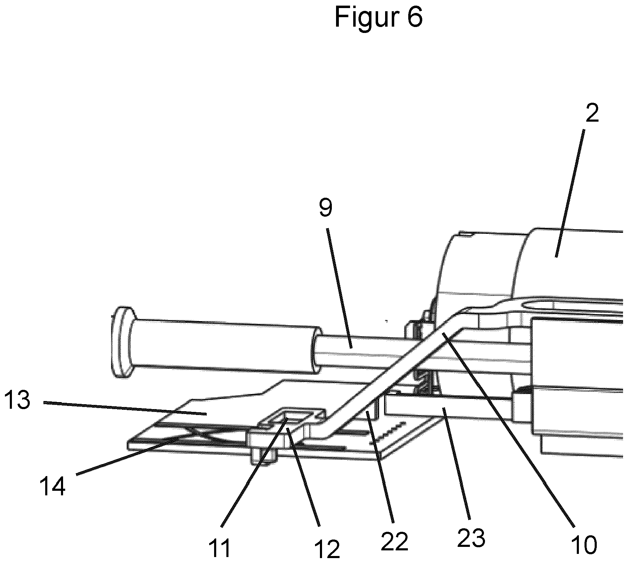

Aus Figur 6 geht eine weitere Ausführungsform des Aktuators hervor. Hierbei ist ein Sicherheitspin 23 mit dem ersten Betätigungselement 3 der ersten Steuerkurve 7 wirkverbunden. Dieser Sicherheitspin 23 bewegt sich je nach Stellung des Aktuators, d.h. des Drehelements 4 mit der Steuerkurve 7 mit. Der Sicherheitspin 23 bewegt sich im vorliegenden Ausführungsbeispiel linear, insbesondere bewegt er sich im normalen Betriebszustand des Aktuators in Bewegungsrichtung des Positionsgebers 9.

Wie aus Figur 6 weiter hervorgeht, bewegt sich der über das Aufnahme- bzw. Halteelement 10 an das Drehelement 4 angekoppelte Positionsgeber 11 bei Betätigung der Schalteinrichtung mit kleinem Abstand vor dem Seilzug 9 über die Leiterschleifen 14 bzw. das von diesen erzeugte Magnetfeld.

Für den Fall, dass es bei der Ankopplung des Aufnahme- bzw. Halteelements 10 zum Drehelement 4 zu einem Defekt kommt, beispielsweise diese Ankopplung reißt, würde sich dann der Positionsgeber 11 bei Bewegung des Drehelements 4 folglich nicht mehr mitbewegen. Die Stellposition des Aktuators wäre dann nicht mehr induktiv ermittelbar.

Aus diesem Grund ist gemäß Figur 6 ein Anschlag 22 am abgekröpften Bereich 24 des Aufnahme- bzw. Halteelements 10 vorgesehen. Gegen diesen Anschlag 22 kann der mit dem ersten Betätigungselement 3 der ersten Steuerkurve 7 wirkverbundene Sicherheitspin 23 gelangen, wenn die Ankopplung vom Aufnahme- bzw. Halteelement 10 zum Drehelement 4 defekt ist und sich der Positionsgeber 11 bei Bewegung des Drehelements 4 nicht mehr mitbewegt.

Über diesen Anschlag 22 verschiebt der Sicherheitspin 23 dann den Positionsgeber 11.

Beispielsweise kann der Sicherheitspin 23 den Positionsgeber 11 an die Stellposition "Parkstellung ausgelegt" bzw. "R, N, D" schieben. Die Software kann dann diesen "nicht-sicheren Zustand", d.h. "Nicht Parkstellung" aufgrund des Defekts erkennen und ein akustisches oder optisches Warnsignal ausgeben.

Ferner geht aus Figur 1 eine mechanische, elektromechanische, elektrische, elektronische, hydraulische oder pneumatische Notverstelleinrichtung 25 hervor, mit welcher das Betätigungselement 3 zum Betätigen der Schalteinrichtung verfahrbar ist, wenn der Antrieb nicht antreibbar ist.

Die Notverstelleinrichtung 25 kann aus einem Stift bestehen, an welchem ein Zahnrad angeordnet ist, welches über eine Öffnung mit einem Werkzeug, insbesondere einem Imbusschlüssel, gedreht werden kann. Das Zahnrad kann dabei entgegen einer Rückstellkraft einer Feder federkraftbeaufschlagbar sein, sodass das Zahnrad mit einem Keilzahnrad einer Abtriebswelle des Antriebs 2 in Wirkverbindung bringbar ist. Mittels dieser Notverstelleinrichtung 25 ist es möglich, das Drehelement 4 mithilfe eines Werkzeuges, insbesondere eines Imbusschlüssels, über die direkt mit der Antriebswelle 1 des Antriebs 2 verbundene Abtriebswelle zu betätigen, sodass das erste Betätigungselement 3 betätigt werden kann.

### Bezugszeichenliste

- 1: Antriebswelle
- 2: Antrieb
- 3: erstes Betätigungselement
- 4: Drehelement
- 5: Schnecke
- 6: Kreisscheibe
- 7: erste Steuerkurve
- 8: zweite Steuerkurve
- 9: Seilzug
- 10: Aufnahme- bzw. Halteelement
- 11: Positionsgeber
- 12: Rahmen
- 13: Leiterplatte
- 14: Leiterschleife
- 15: Zahnrad
- 16: Gehäusebauteil
- 17: zweites Betätigungselement
- 18: Fläche
- 19: Fläche
- 20: erstes Eingriffselement
- 21: zweites Eingriffselement
- 22: Anschlag
- 23: Sicherheitspin
- 24: abgekröpfter Bereich
- 25: Notbetätigungsvorrichtung

## Patentansprüche

1. Aktuator mit
einem eine Antriebswelle (1) antreibenden Antrieb (2),
einem mit der Antriebswelle (1) in Wirkverbindung stehenden ersten Betätigungselement (3) zum Betätigen einer Schalteinrichtung und mit einem mittels der Antriebswelle (1) antreibbaren und drehbar gelagerten Drehelement (4), das eine erste Steuerkurve (7) zur Steuerung der Stellposition des Aktuators aufweist, welche mit dem ersten Betätigungselement (3) zum Betätigen der Schalteinrichtung wirkverbunden ist, wobei die Stellposition des Aktuators mittels eines mit dem Drehelement (4) wirkverbundenen Aufnahme- bzw. Halteelements (10) für einen Positionsgeber (11) induktiv bestimmbar ist,
wobei das induktive Messprinzip darauf basiert, dass ein veränderliches Magnetfeld einen Wirbelstrom in einem metallischen Material erzeugt, **dadurch gekennzeichnet, dass** der Positionsgeber (11) zur induktiven Bestimmung der Stellposition des Aktuators an dem dem Drehelement (4) abgewandten Ende des Aufnahme- bzw. Halteelements (10) angeordnet ist.

2. Aktuator nach Anspruch 1, **dadurch gekennzeichnet, dass** das Aufnahme- bzw. Halteelement (10) ein zweites Betätigungselement (17) zum Anbeziehungsweise Eingriff in eine am Drehelement (4) vorgesehene zweite Steuerkurve (8) aufweist.

3. Aktuator nach einem der Ansprüche 1 oder 2, **dadurch gekennzeichnet, dass** der Positionsgeber (11) ein, vorzugsweise in einem Rahmen (12) aufgenommenes, Metallplättchen ist, welches zur induktiven Bestimmung der Stellposition des Aktuators mit einem magnetischen Feld wechselwirkt, welches vorzugsweise durch an oder auf einer Leiterplatte (13) angeordnete Leiterschleifen (14) gebildet ist.

4. Aktuator nach Anspruch 3, **dadurch gekennzeichnet, dass** der Positionsgeber (11) mit Rahmen (12) gegenüber dem Betätigungselement (17) abgekröpft ist, insbesondere dass er sich in einem abgekröpften Bereich (24) des Aufnahme- bzw. Halteelements 10 befindet.

5. Aktuator nach einem der vorhergehenden Ansprüche, **dadurch gekennzeichnet, dass** ein Sicherheitspin (23) mit dem ersten Betätigungselement (3) der ersten Steuerkurve (7) wirkverbunden ist und am Aufnahme- bzw. Halteelement (10) ein Anschlag (22) für den Sicherheitspin (23) vorgesehen ist, wobei der Positionsgeber (11) mittels des Sicherheitspin (23) verschiebbar ist.

6. Aktuator nach Anspruch 2 oder einem der Ansprüche 3 bis 5 mit Anspruch 2, **dadurch gekennzeichnet, dass** das Drehelement (4) als Kreisscheibe (6) ausgebildet ist, an welcher die beiden Steuerkurven (7, 8) auf jeweils auf einer der gegenüberliegenden Flächen (18, 19) angeordnet sind.

7. Aktuator nach einem der vorhergehenden Ansprüche, **dadurch gekennzeichnet, dass** das Aufnahme- bzw. Halteelement (10) innerhalb eines Gehäuses, insbesondere auf einem Gehäusebauteil (16) des Aktuators angeordnet ist.

8. Aktuator nach Anspruch 2 oder einem der Ansprüche 3 bis 7 mit Anspruch 2, **dadurch gekennzeichnet, dass** zum An- beziehungsweise Eingriff in die erste Steuerkurve (7) ein erstes Eingriffselement (20) des ersten Betätigungselementes (3) vorgesehen ist, und wobei zum An- beziehungsweise Eingriff in die zweite Steuerkurve (8) ein zweites Eingriffselement (21) des zweiten Betätigungselementes (17) vorgesehen ist.

9. Aktuator nach Anspruch 2 oder einem der Ansprüche 3 bis 8 mit Anspruch 2, dass das Drehelement (4) mit den beiden Steuerkurven (7, 8) derart ausgebildet ist, dass es durch die Antriebswelle (1) beziehungsweise den Antrieb (2) zwischen einer maximalen negativen Winkelposition bei bis zu -180° und einer maximalen positiven Winkelposition bei bis zu +180° verdrehbar ist.

10. Aktuator nach einem der vorhergehenden Ansprüche, dass die erste Steuerkurve (7) derart ausgebildet ist, dass bei einer Drehung des Drehelementes (4) aus seiner neutralen Drehposition von 0° in Richtung seiner maximalen negativen Drehposition bei bis zu -180°die Position das Betätigungselementes (3) zum Betätigen einer Schalteinrichtung unverändert bleibt.

11. Aktuator nach Anspruch 8, dass bei einer Drehung des Drehelements (4) aus seiner neutralen Drehposition von 0° in Richtung seiner maximalen positiven Drehposition bei bis zu 180° mittels der ersten Steuerkurve (7) und des ersten Eingriffselementes (20) unterschiedliche Schaltstufen der Schalteinrichtung einstellbar sind.

12. Aktuator nach einem der vorhergehenden Ansprüche, **dadurch gekennzeichnet, dass** auf der Antriebswelle (1) eine Schnecke (11) angeordnet ist, durch welche über eine Zahnradanordnung (12) das Drehelement (4) antreibt.

13. Vorrichtung zum Einlegen einer Parksperre eines Kraftfahrzeugautomatikgetriebes mit einem Aktuator nach einem der Ansprüche 1 bis 12.

14. Vorrichtung nach Anspruch 13, **dadurch gekennzeichnet, dass** eine mechanische, elektromechanische, elektrische, elektronische, hydraulische oder pneumatische Notverstelleinrichtung (24) vorgesehen ist, mit welcher das Betätigungselement (3) verfahrbar und/oder ein Federelement (5) spannbar ist, wenn der Antrieb (2) nicht antreibbar ist.

15. Kraftfahrzeug mit einem Automatikgetriebe und einer damit zusammenwirkenden Vorrichtung nach einem der Ansprüche 13 oder 14.

## Claims

1. Actuator having a drive (2) which drives an input shaft (1), having a first actuating element (3), which is operatively connected to the input shaft (1), for actuating a shift device, and having a rotatably mounted rotary element (4) which can be driven by means of the input shaft (1) and which has a first control cam (7) for controlling the actuating position of the actuator that is operatively connected to the first actuating element (3) for actuating the shift device, wherein the actuating position of the actuator can be determined inductively by means of a receiving or holding element (10), which is operatively connected to the rotary element (4), for a position indicator (11), wherein the inductive measuring principle is based on the fact that a variable magnetic field generates an eddy current in a metallic material, **characterized in that**, for inductive determination of the actuating position of the actuator, the position indicator (11) is arranged at the end of the receiving or holding element (10) that faces away from the rotary element (4).

2. Actuator according to Claim 1, **characterized in that** the receiving or holding element (10) has a second actuating element (17) for engaging in a second control cam (8) provided on the rotary element (4).

3. Actuator according to either of Claims 1 and 2, **characterized in that** the position indicator (11) is a small metal plate which is preferably received in a frame (12) and which, for inductive determination of the actuating position of the actuator, interacts with a magnetic field which is preferably formed by conductor loops (14) arranged on or on top of a printed circuit board (13).

4. Actuator according to Claim 3, **characterized in that** the position indicator (11) with frame (12) is offset with respect to the actuating element (17), in particular **in that** it is situated in an offset region (24) of the receiving or holding element (10).

5. Actuator according to one of the preceding claims, **characterized in that** a safety pin (23) is operatively connected to the first actuating element (3) of the first control cam (7) and a stop (22) for the safety pin (23) is provided on the receiving or holding element (10), wherein the position indicator (11) can be displaced by means of the safety pin (23).

6. Actuator according to Claim 2 or one of Claims 3 to 5 with Claim 2, **characterized in that** the rotary element (4) takes the form of a circular disc (6) on which the two control cams (7, 8) are each arranged on one of the opposite surfaces (18, 19).

7. Actuator according to one of the preceding claims, **characterized in that** the receiving or holding element (10) is arranged within a housing, in particular on a housing component (16) of the actuator.

8. Actuator according to Claim 2 or one of Claims 3 to 7 with Claim 2, **characterized in that** a first engagement element (20) of the first actuating element (3) is provided for engaging in the first control cam (7), and wherein a second engagement element (21) of the second actuating element (17) is provided for engaging in the second control cam (8).

9. Actuator according to Claim 2 or one of Claims 3 to 8 with Claim 2, in that the rotary element (4) with the two control cams (7, 8) is designed in such a way that it can be rotated by the input shaft (1) or the drive (2) between a maximum negative angle position at up to 180° and a maximum positive angle position at up to +180°.

10. Actuator according to one of the preceding claims, in that the first control cam (7) is designed in such a way that the position of the actuating element (3) for actuating a shift device remains unchanged during a rotation of the rotary element (4) from its neutral rotary position of 0° in the direction of its maximum negative rotary position at up to 180°.

11. Actuator according to Claim 8, in that different shift stages of the shift device can be set by means of the first control cam (7) and the first engagement element (20) during a rotation of the rotary element (4) from its neutral rotary position of 0° in the direction of its maximum positive rotary position at up to 180°.

12. Actuator according to one of the preceding claims, **characterized in that** a worm (11) is arranged on the input shaft (1) and drives the rotary element (4) via a gearwheel arrangement (12).

13. Device for engaging a parking lock of a motor vehicle automatic transmission having an actuator according to one of Claims 1 to 12.

14. Device according to Claim 13, **characterized in that** a mechanical, electromechanical, electric, electronic, hydraulic or pneumatic emergency adjusting device (24) is provided by means of which the actuating element (3) can be moved and/or a spring element (5) can be loaded if the drive (2) cannot be driven.

15. Motor vehicle having an automatic transmission and a device according to either of Claims 13 and 14 interacting therewith.

## Revendications

1. Actionneur, comprenant
un entraînement (2) entraînant un arbre d'entraînement (1),
un premier élément d'actionnement (3) en relation fonctionnelle avec l'arbre d'entraînement (1) pour actionner un mécanisme de commutation, et un élément tournant (4) monté rotatif et pouvant être entraîné au moyen de l'arbre d'entraînement (1), qui présente une première came de commande (7) pour commander la position de réglage de l'actionneur, qui est en relation fonctionnelle avec le premier élément d'actionnement (3) pour actionner le mécanisme de commutation, dans lequel la position de réglage de l'actionneur peut être déterminée par induction au moyen d'un élément de réception ou de maintien (10), en relation fonctionnelle avec l'élément tournant (4), pour un codeur de position (11), dans lequel le principe de mesure inductive est basé sur le fait qu'un champ magnétique variable génère un courant de Foucault dans un matériau métallique,
**caractérisé en ce que** pour la détermination par induction de la position de réglage de l'actionneur, le codeur de position (11) est agencé à l'extrémité de l'élément de réception ou de maintien (10), détournée de l'élément tournant (4).

2. Actionneur selon la revendication 1, **caractérisé en ce que** l'élément de réception ou de maintien (10) présente un deuxième élément d'actionnement (17) pour attaquer à ou venir en prise avec une deuxième came de commande (8) prévue sur l'élément tournant (4).

3. Actionneur selon l'une quelconque des revendications 1 ou 2, **caractérisé en ce que** le codeur de position (11) est une lame métallique, de préférence reçue dans un cadre (12), qui interagit pour la détermination par induction de la position de réglage de l'actionneur avec un champ magnétique qui est formé de préférence par des boucles conductrices (14) agencées au niveau de ou sur une carte de circuits imprimés (13).

4. Actionneur selon la revendication 3, **caractérisé en ce que** le codeur de position (11) avec son cadre (12) est coudé par rapport à l'élément d'actionnement (17), en particulier **en ce qu'**il se trouve dans une zone coudée (24) de l'élément de réception ou de maintien (10).

5. Actionneur selon l'une quelconque des revendications précédentes, **caractérisé en ce qu'**une broche de sécurité (23) est en relation fonctionnelle avec le premier élément d'actionnement (3) de la première came de commande (7), et une butée (22) est prévue pour la broche de sécurité (23) au niveau de l'élément de réception ou de maintien (10), le codeur de position (11) pouvant être déplacé au moyen de la broche de sécurité (23).

6. Actionneur selon la revendication 2 ou l'une des revendications 3 à 5 avec la revendication 2, **caractérisé en ce que** l'élément tournant (4) est réalisé sous forme de disque circulaire (6) sur lequel sont agencées les deux cames de commande (7, 8) sur respectivement l'une des surfaces opposées (18, 19).

7. Actionneur selon l'une quelconque des revendications précédentes, **caractérisé en ce que** l'élément de réception ou de maintien (10) est agencé à l'intérieur d'un boîtier, en particulier sur un composant de boîtier (16) de l'actionneur.

8. Actionneur selon la revendication 2 ou l'une des revendications 3 à 7 avec la revendication 2, **caractérisé en ce que** pour attaquer à ou venir en prise avec la première came de commande (7), un premier élément de mise en prise (20) du premier élément d'actionnement (3) est prévu, dans lequel un deuxième élément de mise en prise (21) du deuxième élément d'actionnement (17) est prévu pour attaquer à ou venir en prise avec la deuxième came de commande (8).

9. Actionneur selon la revendication 2 ou l'une des revendications 3 à 8 avec la revendication 2, en ce que l'élément tournant (4) pourvu des deux cames de commande (7, 8) est réalisé de telle sorte qu'il peut être amené à tourner par l'arbre d'entraînement (1) ou l'entraînement (2) entre une position angulaire négative maximale à jusqu'à -180° et une position angulaire positive maximale à jusqu'à +180°.

10. Actionneur selon l'une quelconque des revendications précédentes, en ce que la première came de commande (7) est réalisée de telle sorte qu'à une rotation de l'élément tournant (4) de sa position de rotation neutre de 0° en direction de sa position de rotation négative maximale à jusqu'à -180°, la position de l'élément d'actionnement (3) pour l'actionnement d'un mécanisme de commutation reste inchangée.

11. Actionneur selon la revendication 8, en ce qu'à une rotation de l'élément tournant (4) de sa position de rotation neutre de 0° en direction de sa position de rotation positive maximale à jusqu'à 180° au moyen de la première came de commande (7) et du premier élément de mise en prise (20), différents niveaux de commutation du mécanisme de commutation peuvent être réglés.

12. Actionneur selon l'une quelconque des revendications précédentes, **caractérisé en ce que** sur l'arbre d'entraînement (1) est disposée une vis sans fin (11) qui entraîne l'élément tournant (4) par l'intermédiaire d'un agencement de roues dentées (12).

13. Dispositif permettant de serrer un frein de stationnement d'une transmission automatique de véhicule automobile comprenant un actionneur selon l'une quelconque des revendications 1 à 12.

14. Dispositif selon la revendication 13, **caractérisé en ce qu'**un équipement de réglage de secours (24) mécanique, électromécanique, électrique, électronique, hydraulique ou pneumatique est prévu qui permet de déplacer l'élément d'actionnement (3) et/ou de tendre un élément faisant ressort (5) lorsque l'entraînement (2) ne peut pas être entraîné.

15. Véhicule automobile, comprenant une transmission automatique et un dispositif selon l'une quelconque des revendications 13 ou 14, qui coopère avec celle-ci.
